# EUROPEAN PATENT APPLICATION

(11) **EP 2 103 478 A2**
(43) Date of publication of application: **23.09.2009**
(21) Application number: 09155845.2
(22) Date of filing: 23.03.2009
(51) Int. Cl.: B60N 2/015, F41H 7/02

(54) **Vehicle safety seat**

(30) Priority: 21.03.2008 IT TO20080218
(71) Applicant: Gemini S.r.L., 10040 Cumiana (TO) (IT)
(72) Inventor: Lombardo, Silvio, 10060 Roletto (Torino) (IT)
(74) Representative: Rondano, Davide

(57) **Abstract**

Vehicle safety seat (1) comprising a seating part (10) and a backrest part (20), wherein the seat is adapted to be mounted on a vehicle, between a floor region and a roof region thereof, by means of a plurality of belts (30, 40, 130) arranged above and below the seat (1). The seat comprises a rigid frame (50, 60) which supports the seating part (10) and the backrest part (20). The plurality of belts comprises a pair of lower belts (30) which are anchored to the lower end of the backrest part (20), on the opposite sides thereof, and are arranged to anchor the seat (1) to the floor region of the vehicle, and a pair of upper belts (40) which are anchored to the upper end of the backrest part (20), on the opposite sides thereof, and are arranged to anchor the seat (1) to the roof region of the vehicle. The lower belts (30) or the upper belts (40) are provided with suspension means (140), respectively, for allowing a controlled elastic elongation of those belts as a result of a tensile force applied thereto.

## Description

The present invention relates to a vehicle safety seat comprising a seating part and a backrest part, wherein said seat is adapted to o be mounted on a vehicle, between a floor region and a roof region thereof, by means of a plurality of belts arranged above and below the seat.

A seat of the above-specified type is disclosed for instance in Patent Application EP 1 398 205 and comprises a shell of a textile material connected to a floor region and to a roof region of the vehicle by means of front and rear belts. Such a seat is unsuitable for particular applications, for instance for providing the driving place of a terrain vehicle, or in those cases where the seat must have mine-proof safety characteristics.

It is an object of the present invention to provide a seat which is suitable for the aforementioned applications.

This object is fully achieved according to the present invention by virtue of a seat having the features set forth in the enclosed independent claim 1.

Preferred embodiments of the invention are set forth in the dependent claims, the contents of which is to be intended as integral and integrating part of the following description.

The features and the advantages of the present invention will be apparent from the following detailed description, given purely by way of non-limiting example with reference to the appended drawings, in which:
- Figure 1 is a perspective view of a safety seat according to a preferred embodiment of the invention;
- Figure 2 is a section view of a detail of the seat of Figure 1;
- Figure 3 is a perspective view of a variant of the seat of Figure 1, shown without padded parts; and
- Figure 4 is a perspective view of a safety seat according to a further preferred embodiment of the invention.

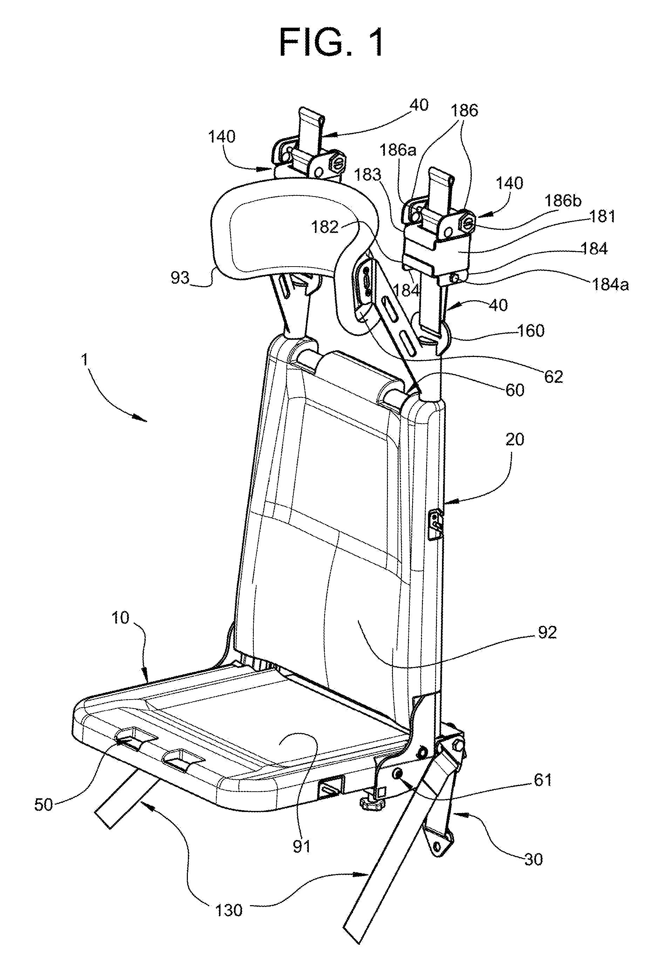

With reference to Figure 1, a vehicle safety seat is generally indicated 1 and comprises a seating part 10 and a backrest part 20. The seat 1 is adapted to be mounted on a vehicle (not illustrated), between a floor region and a roof region (for instance a roll bar) thereof, by means of a plurality of belts 30 and 40 arranged above and below the seat 1.

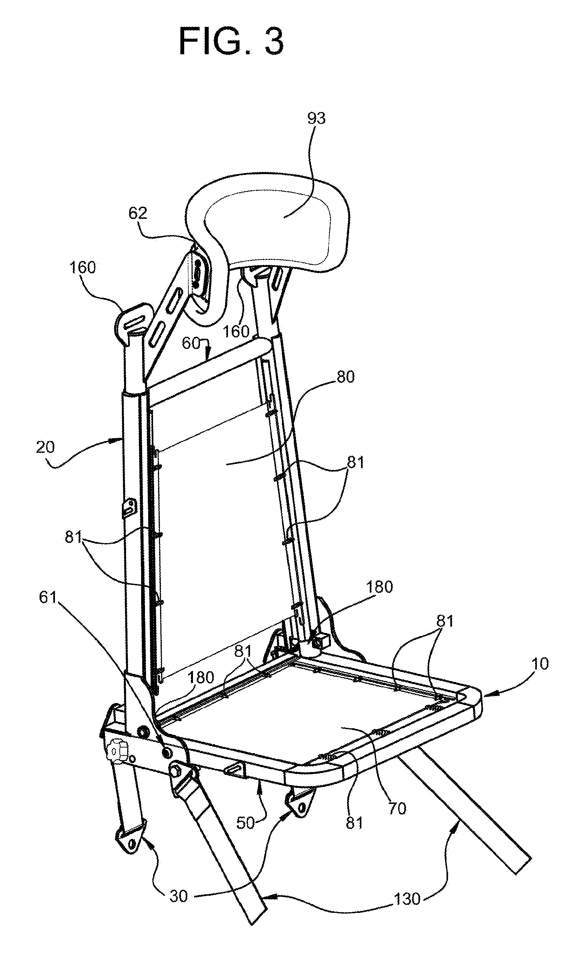

The seat 1 comprises a rigid frame which supports the seating part 10 and the backrest part 20. More specifically, the frame comprises a seating frame 50 and a backrest frame 60 (which can be seen more clearly in Figure 3), each of which is formed by a plurality of profiled members connected to each other. Preferably, those profiled members are made of a material having a low specific gravity, for instance of an aluminium alloy. The seating frame 50 and the backrest frame 60 may be rigidly connected to each other or, as in the illustrated examples, the seating frame 50 may be arranged to be connected to the backrest frame 60 so as to be tiltable about a rotation pin 61. Preferably, a headrest frame 62, which is also made of a material having a low specific gravity, for instance of a carbon fibre composite material, is secured to the backrest frame 60.

A seating elastic support 70 and a backrest elastic support 80 (which can be seen in Figure 3) adapted to define respective rest surfaces for an occupant of the seat are secured to the frames 50 and 60, respectively. The elastic supports 70 and 80 are each formed by an elastic membrane, for instance a membrane made of rubber mono-directional stretch fabric, which is secured to the respective frame 50 and 60 by means of anchoring elements 81, such as hooks and springs.

Respective paddings 91 and 92 are also provided on the seating part 10 and on the backrest part 20. Preferably, each padding 91 and 92 is made of foamed material and has a higher density in a peripheral area corresponding to the respective frame 10 and 20, and a lower density in a middle area corresponding to the respective elastic support 70 and 80. A padding 93 of foamed material is also arranged on the headrest frame 62. Removable covers may also be provided to cover the paddings 91, 92 and 93.

The seat is also provided with a safety belt system (not illustrated) of conventional type.

The plurality of belts 30 and 40 specifically comprises a pair of lower belts 30, which are secured to the lower end of the backrest part 20 on opposite sides thereof and are arranged to anchor the seat 1 to the floor region of the vehicle, and a pair of upper belts 40, which are secured to the upper end of the backrest part 20 on opposite sides thereof and are arranged to anchor the seat 1 to the roof region of the vehicle. Preferably, a further pair of additional lower belts 130 is provided, which are also secured to the lower end of the backrest part 20 (or to the seating part 10) on opposite sides thereof and are arranged to anchor the seat 1 to the floor region of the vehicle. The additional lower belts 130 serve to provide the seat 1 with greater stability and are arranged to anchor the seat 1 to additional anchoring points of the vehicle floor different from those of the main lower belts 30.

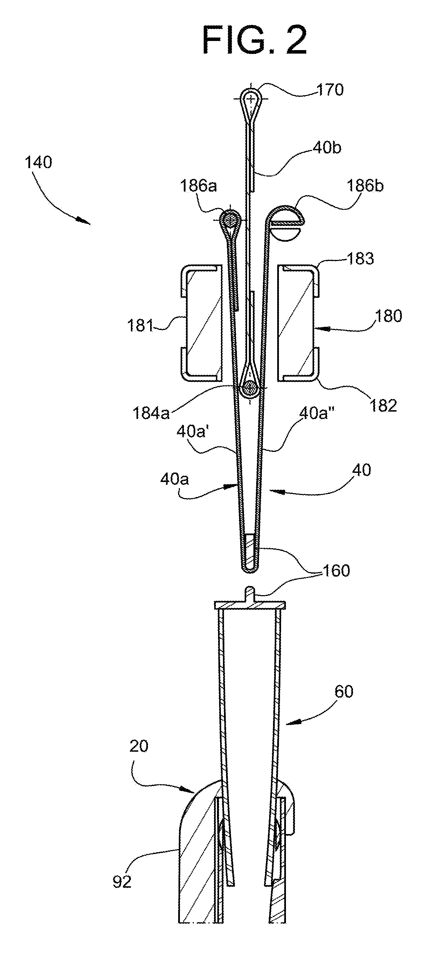

According to the invention, the upper belts 40 or the lower belts 30 (the upper belts 40 in the example of Figures 1 and 2) are provided with suspension means 140 adapted to allow a controlled elastic elongation of those belts as a result of a tensile force applied thereto.

A preferred embodiment of the suspension means 140 is illustrated in particular in Figure 2, which shows a section view of the suspension means taken in a plane coinciding with the middle plane of one of the upper belts 40.

As can be seen in Figure 2, each upper belt 40 is not a single belt, but is formed by two separate belt parts 40a and 40b, that is to say, a proximal part and a distal part, respectively. The proximal part 40a of the upper belt 40 is connected to the upper end of the backrest frame 60, in particular is passed through a return element 100 so as to form two separate branches, which in the remaining part of the description will be referred to as front branch 40a' and rear branch 40a". The distal part 40b of the upper belt 40 is adapted to be connected to an anchoring point of the roof region of the vehicle, for instance a roll bar (not illustrated). To this end, the distal end of the distal part 40b of the upper belt 40 is conventionally arranged for connection to that anchoring point. For instance, as in the embodiment illustrated in Figures 1 and 2, the distal end is bent and closed onto itself so as to form a loop 170. However, the way of anchoring to the roof region of the vehicle is not essential in view of the object of the invention.

The other end of the distal part 40b of the upper belt 40 is sandwiched between the front branch 40a' and the rear branch 40a" of the proximal part 40a of the upper belt 40. In the zone where the distal part 40b of the upper belt 40 is interposed between the two branches 40a' and 40a" of the proximal part 40a, those belt parts pass through a buffer device 180.

The buffer device 180 comprises a buffer element 181 of elastic material, for instance of rubber, having a through opening for being passed through by the proximal part 40a and by the distal part 40b of the upper belt 40, and a pair of proximal and distal plates 182 and 183 between which the buffer element 181 is interposed. The proximal plate 182 is provided with lateral tabs 184, between which a stationary pin 184a is mounted. The proximal end of the distal part 40b of the belt 40 is anchored to the stationary pin 184a, for instance through a loop. The distal plate 183 is provided with lateral tabs 186, between which there are mounted a stationary pin 186a and a rotary pin 186b parallel to each other. The distal end of the front branch 40a' of the proximal part 40a of the belt 40 is anchored to the stationary pin 186a, for instance through a loop, whereas the distal end of the rear branch 40a" is anchored to the rotary pin 186b in such a manner that it can be wound around it, if necessary. To this end, the rotary pin 186b is equipped with a conventional adjusting member (not illustrated) to adjust the extent to which the proximal part 40a of the belt 40 is wound, and hence the overall length of that belt.

The buffer device 180 is therefore configured in such a manner that, when a tensile force is applied to the upper belt 40, an elastic compression is exerted on the buffer element 181. The proximal part 40a of the belt 40 exerts, in fact, through the pins 186a and 186b a force directed downwards on the distal plate 183 (upper plate) , whereas the distal part 40b of the belt 40 exerts through the pin 184a a force directed upwards on the proximal plate 182 (lower plate). This makes it possible to control the elongation of the upper belt 40 when a tensile force is applied to this latter. Though particularly preferred, the suspension arrangement described above is not to be intended as limiting, as the invention embraces other variants which may be conceived by the skilled person. For instance, the buffer device 180 might also be provided on both the lower branches 30, instead of the upper branches 40, the structure of the device remaining substantially unchanged.

In the assembled condition, the belts 30, 40 and 130 of the seat 1 are held under tension, whereby the assembly formed by the seat and the belts behaves as a substantially rigid assembly in normal operating conditions. The seat is therefore also suitable for the driving place of a terrain vehicle.

In case of an impulsive load on the bottom of the vehicle (in particular of an armoured vehicle), for instance in case of a mine blast, the dynamic behaviour of the safety seat according to the invention is the following. At a first stage, the bottom of the vehicle deforms upwards, thus causing the belts which anchor the seat to the remaining part of the vehicle to loosen. At this point, the seat is no more rigidly connected to the vehicle. The shock wave causes therefore the whole vehicle to raise, and consequently the roof region of the vehicle is led to exert an impulsive pull on the upper belts 40 from which the seat with the relevant occupant is hanged. The buffer element 181 of the buffer device 180 is therefore elastically compressed, thereby dampening the effects of the pull on the seat. Once the maximum height has been reached (along with a relieving of the buffer element 181), the vehicle falls down by gravity, and therefore the floor region of the vehicle is led to exert an impulsive pull on the lower belts 30 and, through the seat 1, on the upper belts 40. Therefore, the buffer element 181 of the buffer device 180 is again compressed elastically, which reduces the effects of the pull on the seat accordingly.

A similar behaviour occurs in case of an impulsive load on the bottom of the vehicle (in particular of an armoured vehicle), such as a mine blast, with a buffer device applied onto the lower belts 30 of the seat, since at a first stage the roof of the vehicle exerts, through the upper belts 40 and the seat 1, a tensile force onto the lower belts 30 and therefore brings about an elastic compression stress in the buffer element 181 of the buffer device 180, whereas at a final stage the bottom of the vehicle exerts a tensile force directly onto the lower belts 30 and therefore causes the buffer element 181 of the buffer device 180 to be elastically compressed.

The seat according to the invention enables therefore to reduce the pull peaks on the belts in case of an impulsive load which acts on the bottom of the vehicle causing this latter to deform.

A variant of the safety seat of Figure 1, generally substantially identical to the embodiment of that figure, is illustrated in Figure 3, where parts and elements corresponding to those of Figure 1 have been indicated with the same numeral references. For the sake of simplicity, the variant of Figure 3 is illustrated without paddings. Such a variant differs from the seat of Figure 1 in that dampening means 180 of elastic material, for instance of rubber, are provided, which are mounted on the backrest frame 60 or, alternatively, on the seating frame 50. According to that variant, the seating frame 50 is tiltable about the pin 61. In the lowered condition of the seating frame 50, the dampening means 180 are interposed between the seating frame 50 and the backrest frame 60, whereby the seating frame 50 is elastically connected to the backrest frame 60.

Naturally, the principle of the invention remaining unchanged, the embodiments and constructional details may vary widely with respect to those described and illustrated purely by way of non-limiting example.

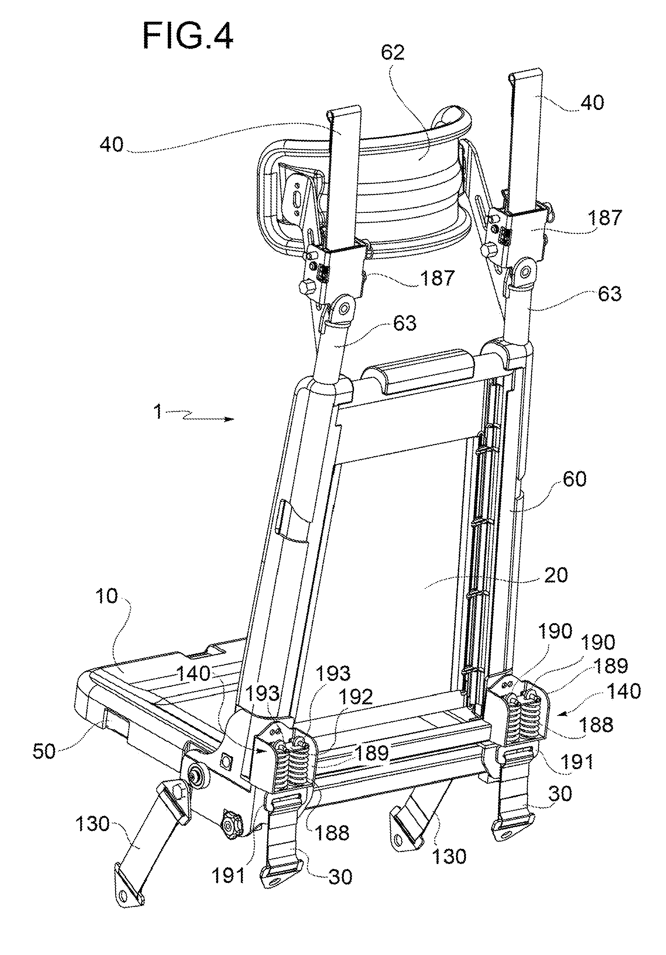

In particular, the belt tensioning device comprising the rotary pin, on which a proximal end portion of a belt is wound, in the example of Figures 1 and 2 the upper belt 40, to make it possible to adjust the overall length of that belt, need not be incorporated into the buffer device 180, as in the example of Figures 1 and 2, but may also be separate from this latter, in order for instance to reduce the overall size of the safety seat. In this connection, Figure 4, in which parts and elements identical or corresponding to those of Figures 1 and 2 have been given the same numeral references, illustrates a second preferred embodiment of a safety seat according to the present invention, according to which the belt tensioning devices are mounted on the upper belts, whereas the buffer devices are mounted on the lower belts.

With reference to Figure 4, at the upper ends of a pair of vertical tubular elements 63 of the backrest frame 60 respective belt tensioning devices 187 are anchored, each of which comprises a respective rotary pin provided with a conventional adjusting member (not illustrated) to adjust the overall length of the respective upper belt 40.

Between the backrest frame 60 and the lower belts 30 respective suspension devices 140 are interposed, each of which comprises elastic means 188 (in the illustrated embodiment a pair of cylindrical compression springs acting in parallel). More specifically, each suspension device 140 comprises a sheet metal body 189 which is secured to the backrest frame 60 and the bottom wall of which has a slot (not shown) for being passed through by a pair of vertical branches 190 of an anchoring member 191 by means of which the respective lower belt 30 is anchored to the seat frame. The springs 188 are each mounted around a respective vertical branch 190 of the anchoring member 191 and insist at their lower ends against the bottom wall of the body 189 and at their upper ends against an upper horizontal plate 192 which is drivingly connected for vertical translation with the two vertical branches 190 of the anchoring member 191 by means of a pair of pegs 193. In this way, a tensile force acting on the lower belt 30 brings about, through the associated anchoring member 191, a compression of the two springs 188 which results in a reduction of the pull peaks in case of impulsive loads acting on the bottom of the vehicle.

With respect to the first embodiment described above with reference to Figures 1 and 2, this second embodiment of a safety seat according to the invention has the advantage of more compact dimensions. Apart from that, by virtue of the provision of suspension means (made in the present case as springs) associated to the lower or upper belts which connect the seat frame to the floor region or to the roof region, respectively, of the vehicle, an effect of reduction in the pull peaks on the belts, in case of an impulsive load acting on the bottom of the vehicle, is obtained, which is similar to that described above with reference to the embodiment of Figures 1 and 2.

The safety seat illustrated in Figure 4 might be modified by inverting the arrangement of the belt tensioning devices and of the buffer devices, that is to say, by connecting the belt tensioning devices to the lower belts and the buffer devices to the upper belts, as well as by changing the number and the type of the elastic elements provided in each buffer device.

## Claims

1. Vehicle safety seat (1) comprising a seating part (10), a backrest part (20) and a plurality of belts (30, 40, 130) by means of which the seating part (10) and the backrest part (20) can be mounted between a floor region and a roof region of the vehicle,
**characterized**
**in that** the seat further comprises a frame (50, 60) which supports the seating part (10) and the backrest part (20),
**in that** said plurality of belts comprises a pair of lower belts (30) which are anchored to the lower end of the backrest part (20) and are arranged to anchor the seat (1) to the floor region of the vehicle, and a pair of upper belts (40) which are anchored to the upper end of the backrest part (20) and are arranged to anchor the seat (1) to the roof region of the vehicle, and
**in that** the lower belts (30) or the upper belts (40) are provided with suspension means (140) adapted to allow a controlled elastic elongation of those belts (30, 40) as a result of a tensile force applied thereto.

2. Seat according to claim 1, wherein the frame comprises a seating frame (50) for the seating part (10) and a backrest frame (60) for the backrest part (20), which are formed each by a plurality of profiled members connected to each other, wherein a seating elastic support (70) and a backrest elastic support (80) are secured to the seating frame and to the backrest frame (50, 60), respectively, to define respective rest surfaces for an occupant of the seat, and wherein respective paddings (91, 92) are also disposed on the seating part (10) and on the backrest part (20), each of which is made of a foamed material and has a higher density in a peripheral area corresponding to the respective frame (10, 20) and a lower density in a middle area corresponding to the respective elastic support (70, 80).

3. Seat according to claim 1 or claim 2, further comprising a pair of additional lower belts (130) arranged to anchor the seat to the floor region of the vehicle in additional anchoring points different from those of the other lower belts (30).

4. Seat according to any of the preceding claims, wherein said suspension means comprise, for each belt (30, 40), a buffer device (180) adapted to be elastically compressed when a tensile force is applied to that belt.

5. Seat according to claim 4, wherein each upper belt (40) is formed by a proximal part (40a) and by a distal part (40b) separate from each other, wherein the proximal part (40a) of that belt (40) is connected on the one side to the upper end of the backrest part (20) and on the other to a distal end of the buffer device (180), and wherein the distal part (40b) of that belt (40) is connected on the one side to a proximal end of the buffer device (180) and is arranged on the other side to be connected to the roof region of the vehicle.

6. Seat according to claim 5, wherein each buffer device (180) comprises a proximal plate (182) and a distal plate (183) connected to the distal part (40b) and to the proximal part (40a), respectively, of the respective upper belt (40), and a buffer element (181) of elastic material which has a through opening for being assed through by the proximal part (40a) and by the distal part (40b) of the respective upper belt (40) and is interposed between the proximal plate (182) and the distal plate (183).

7. Seat according to claim 6, wherein the proximal part (40a) of each upper belt (40) is bent on itself so as to form two separate branches (40a', 40a"), and wherein the distal part (40b) of each upper belt (40) is sandwiched between said branches (40a', 40a") in the region of the buffer device (180).

8. Seat according to claim 7, wherein the proximal part (40a) of each upper belt (40) is connected to the respective buffer device (180) through adjusting means (186b) adapted to adjust the overall length of that belt.

9. Seat according to any of claims 1 to 3, wherein said suspension means comprise, for each belt (30, 40), at least one spring (188) adapted to deform elastically when a tensile force is applied to that belt.

10. Seat according to any of the preceding claims, wherein the seating part (10) is tiltable relative to the backrest part (20) and wherein the seat further comprises dampening means (180) of elastic material which elastically connect the seating part (10) to the backrest part (20) and, in the lowered condition of the seating part (10), are interposed between the backrest part (20) and the seating part (10).
